# EUROPÄISCHE PATENTSCHRIFT

(11) **EP 1 699 584 B1**
(45) Veröffentlichungstag und Bekanntmachung des Hinweises auf die Patenterteilung: **30.03.2011**
(21) Anmeldenummer: 04804164.4
(22) Anmeldetag: 22.12.2004
(51) Int. Cl.: B23B 31/40

(54) **INNENSPANNEINRICHTUNG UND DAMIT AUSGERÜSTETES SPANNSYSTEM**
INNER CHUCKING DEVICE AND A CHUCKING SYSTEM EQUIPPED THEREWITH
DISPOSITIF DE TENSION INTERIEURE ET SYSTEME DE SERRAGE AINSI EQUIPE

(30) Priorität: 23.12.2003 DE 20320084 U
(43) Veröffentlichungstag der Anmeldung: 13.09.2006
(73) Patentinhaber: HAINBUCH GMBH SPANNENDE TECHNIK, D-71672 Marbach (DE)
(72) Erfinder: WELLER, Hans-Michael, 71672 Marbach (DE)
(74) Vertreter: Patentanwälte Ruff, Wilhelm, Beier, Dauster & Partner
(86) Internationale Anmeldenummer: PCT/EP2004/014568
(87) Internationale Veröffentlichungsnummer: WO 2005/063426

(56) Entgegenhaltungen:
- FR-A- 2 297 107
- US-A- 5 133 565

## Beschreibung

Die Erfindung betrifft eine Innenspanneinrichtung, gemäß dem Oberbegriff des Anspruchs 1 und wie aus FR-A-2297107 bekannt ist. Eine Innenspanneinrichtung dieser Art ist insbesondere zur zeitweiligen Festlegung eines mit einer von außen zugänglichen Innengeometrie ausgestatteten Werkstückes geeignet und für den Bereich der Bearbeitung von Werkstücken insbesondere mit Werkzeugmaschinen, einsetzbar. Weiterhin betrifft die Erfindung ein mit einem derartigen Innenspannfutter ausgerüstetes Spannsystem.

lnnenspanneinrichtungen sind aus dem Stand der Technik in vielfältigen Ausführungsformen bekannt. Sie dienen beispielsweise zur Aufnahme von Werkstücken an einer Werkzeugmaschine für Bearbeitungsprozesse wie Drehen oder Fräsen. Für eine Innenspannung ist an dem Werkstück eine von außen zugängliche Innenkontur, insbesondere in Form einer Bohrung oder einer prismatischen Ausnehmung erforderlich. In diese Innenkontur greift die Innenspanneinrichtung ein, wodurch eine Bearbeitung des Werkstücks an einer Außen- oder Innenkontur ermöglicht wird. Innenspanneinrichtungen werden bevorzugt für die Werkstückbearbeitung mit Dreh- oder Fräsmaschinen vorgesehen, andere Bearbeitungsprozesse wie Erodieren oder Schweissen sind ebenfalls denkbar.

Aus dem Stand der Technik ist die DD 266 307 A1 bekannt, die eine Innenspanneinrichtung zur Lagebestimmung und Spannung von prismatischen Werkstücken mit bereits bearbeiteter Bohrung zeigt und für Werkzeugmaschinen mit automatischer Beschickung der Spanneinrichtung verwendbar ist. Dazu weist die Innenspanneinrichtung einen Druckbolzen auf, der von einem hydraulischen Antrieb angetrieben und in einer zylindrischen Bohrung geführt ist. Der Druckbolzen weist einen Außenkegel auf, an dessen konischer Mantelfläche gehärtete Stahlkugeln angeordnet sind, die in radialen Bohrungen gleiten können. Eine Bewegung des Druckbolzens führt zu einem Abwälzvorgang der Stahlkugeln an der Mantelfläche des Außenkegels des Druckbolzens, wodurch sich die Kugeln in radialer Richtung bewegen. Zur Übertragung einer Spannkraft auf eine Innenfläche des zu spannenden Werkstücks sind in den radialen Bohrungen Druckstifte vorgesehen, die mit den Stahlkugeln in Wirkverbindung stehen. Dadurch kann ein Werkstück über eine Wirkverbindung des Außenkegels, der Stahlkugeln und der Druckstifte der Innenspanneinrichtung mit der Innengeometrie des Werkstücks für Bearbeitungsvorgänge an Werkzeugmaschinen gespannt werden.

Die US 4,079,896 zeigt eine Innenspanneinrichtung, bei der kreisringabschnittartige Spannsegmente, die eine konische Innengeometrie aufweisen, vorgesehen sind. Diese Spannsegmente sind auf einem konischen Spanndorn beweglich angebracht. Eine synchronisierte Bewegung der Spannsegmente längs einer Mittelachse des Spanndorns ist mittels eines Einstellrings vorgesehen, der über ein Gewinde in Wirkverbindung mit dem konischen Spanndorn steht. Durch die synchronisierte Bewegung der Spannsegmente längs der Mittelachse des Spanndorns tritt eine Keilwirkung zwischen den Spannsegmenten und dem Spanndorn auf, die zu einer Vergrößerung oder Verkleinerung eines effektiven Durchmessers der Spannsegmente führt. Damit kann eine Innenkontur eines Werkstücks gespannt werden, wobei die Spannsegmente durch die Keilwirkung unter Vergrößerung des effektiven Durchmessers nach außen bewegt werden, um sich an die zu spannende Innenfläche des Werkstücks anzulegen. Um diese Bewegung der Spannsegmente hervorzurufen, muss der Einstellring relativ zum Spanndorn längs des Gewindes verdreht werden. Eine lineare Komponente dieser Bewegung wird auf die Spannsegmente übertragen, während eine Rotationskomponente der Bewegung zu Reibungskräften und dadurch zu Reaktionskräften in Umfangsrichtung der Innenspanneinrichtung führt.

Die FR-A-2 297 107 zeigt eine Innenspanneinrichtung mit einem Spindelflansch und einem stirnseitig angebrachten Aufnahmedorn, wobei der Aufnahmedorn einen sich verjüngenden, sechseckigen Querschnitt aufweist. Auf dem Aufnahmedorn ist eine bewegbare Segmentspanneinrichtung mit drei Spannsegmenten vorgesehen, die an ihrer Innenseite entsprechend zu dem Aufnahmedorn ausgebildet und an der Außenseite kreiszylindrisch ausgebildet ist. Ein zentraler Zugbolzen überträgt Betätigungskräfte auf die Segmentspanneinrichtung.

### Aufgabe und Lösung

Die Aufgabe der Erfindung besteht darin, eine Innenspanneinrichtung und ein Spannsystem der eingangs genannten Art zu schaffen, die kurze Rüstzeiten bei einer hohen Rundlaufgenauigkeit ermöglichen.

Diese Aufgabe wird durch eine Innenspanneinrichtung mit den Merkmalen des Anspruchs 1 gelöst. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß ist an einem Spindelflansch, der insbesondere scheibenartig ausgeführt sein kann, ein zumindest abschnittsweise konischer Aufnahmedorn vorgesehen. Der Aufnahmedorn ist koaxial zu einer Mittelachse des Spindelflansches angebracht und für eine Übertragung von Kräften und Drehmomenten von dem Spindelflansch auf den Aufnahmedorn und umgekehrt vorgesehen. Auf dem Aufnahmedorn ist eine zwischen einer Ruheposition und einer Funktionsposition bewegbare Segmentspanneinrichtung vorgesehen, die zumindest zwei miteinander gekoppelte, gestaltfeste Spannsegmente aufweist. Die Spannsegmente sind insbesondere als Kreisringabschnitte mit konischer Innenkontur ausgeführt. Sie sind hinsichtlich ihrer Dimensionierung und Materialauswahl im Rahmen der für die Innenspannung von Werkstücken vorgesehenen Spannkräfte und Spannmomente im wesentlichen als gestaltfest anzusehen. Die zumindest zwei Spannsegmente sind elastisch miteinander gekoppelt, was insbesondere durch Gummielemente verwirklicht werden kann. Die Gummielemente sind dabei an gegenüberliegenden, in radialen Schnittebenen der Spannsegmente angeordneten Stirnseiten der Spannsegmente anvulkanisiert, um einen elastischen Verbund der Spannsegmente zu verwirklichen. An einer orthogonal zur Axialrichtung ausgerichteten Stirnseite der Spannsegmente ist eine Wirkverbindung mit einem Zugbolzen zur Übertragung von Betätigungskräften auf die Segmentspanneinrichtung vorgesehen. Dabei weist der Zugbolzen zumindest eine Wirkfläche auf, die eine Kraft- und/oder Momentenübertragung auf die Segmentspanneinrichtung erlaubt. Durch die Kräfte und/oder Momente wird eine Bewegung der Segmentspanneinrichtung auf dem Aufnahmedorn zwischen der Ruheposition und der Funktionsposition ermöglicht.

An dem Spindelflansch ist an einer dem Aufnahmedorn abgewandten Stirnseite ein zumindest abschnittsweise kegelstumpfförmiger Zentrierdorn vorgesehen, der ebenfalls wie der Aufnahmedorn konzentrisch zur Mittelachse des Spindelflansches angebracht ist. Der Zentrierdorn erlaubt eine zentrierte Anbringung des Spindelflansches an einer entsprechend gestalteten Aufnahme einer Werkzeugmaschine. Durch den kegelstumpfförmigen Zentrierdorn wird eine besonders vorteilhafte Zentrierung der Innenspanneinrichtung gegenüber der Werkzeugmaschine erreicht, so dass aufwendige Justagemaßnahmen zur Sicherstellung einer hohen Rundlaufgenauigkeit der Innenspanneinrichtung auf ein Minimum reduziert werden können und eine schnelle Anbringung der Innenspanneinrichtung an der Werkzeugmaschine möglich ist.

In Ausgestaltung der Erfindung ist der Zugbolzen mit einer Zugeinrichtung verbunden, die eine Schnittstelle für die Ankopplung eines in einem Spannfutter vorgesehenen Zugrohradapters aufweist. Eine Zugeinrichtung erlaubt eine Übertragung von Zug- und/oder Druckkräften von einem Zugrohradapter, der in einem der Innenspanneinrichtung vorgeschalteten Spannfutter vorgesehen ist und der über ein von einer Werkzeugmaschine ansteuerbares Zugrohr mit Zug- und/oder Druckkräften beaufschlagt wird. Dadurch wird einerseits eine automatisierte Betätigung des Zugbolzens der Innenspanneinrichtung ermöglicht, andererseits sind dadurch auch hohe Zug- oder Druckkräfte mit hoher Dynamik auf den Zugbolzen übertragbar.

In weiterer Ausgestaltung der Erfindung sind an der Zugeinrichtung zwischen einer Montageposition und einer Funktionsposition bewegbare Kopplungselemente für eine Wirkverbindung mit dem Zugrohradapter vorgesehen. Durch die Kopplungselemente lässt sich eine lösbare Wirkverbindung zwischen der Zugeinrichtung und dem Zugrohradapter verwirklichen, die eine schnelle Montage bzw. Demontage der Innenspanneinrichtung in ein Spannfutter einer Werkzeugmaschine erlaubt. Dadurch kann die Innenspanneinrichtung insbesondere an Spannfuttern angebracht werden, die ursprünglich lediglich zur Aufnahme von Spannköpfen oder Spannzangen bestimmt waren.

In weiterer Ausgestaltung der Erfindung sind die Kopplungselemente in radialer Richtung verschieblich an der Zugeinrichtung angebracht. Dadurch kann eine besonders wirkungsvolle Verbindung der Kopplungselemente mit dem Zugrohradapter verwirklicht werden, da die von dem Zugrohradapter zu übertragenden Druck- und/oder Zugkräfte nicht zu Kraftkomponenten führen, die eine Entriegelung der Kopplungselemente von dem Zugrohradapter hervorrufen könnten.

In weiterer Ausgestaltung der Erfindung weisen die Kopplungselemente jeweils zumindest eine formschlüssig wirkende Riegelgeometrie auf. Damit können die Kopplungselemente insbesondere einen radial nach innen gerichteten, umlaufenden Bund des Zugrohradapters hintergreifen und somit eine hochbelastbare Verbindung zur Übertragung der Zug-und/oder Druckkräfte verwirklichen.

In weiterer Ausgestaltung der Erfindung ist eine mit den Kopplungselementen verbundene Betätigungsvorrichtung vorgesehen. Dadurch wird insbesondere eine synchrone oder zeitlich aufeinanderfolgende Betätigung der Kopplungselemente ermöglicht, so dass ein Kopplungsvorgang zwischen der Innenspanneinrichtung und dem Zugrohradapter des Spannfutters in vorteilhafter Weise verwirklicht werden kann. Die Betätigungsvorrichtung ist insbesondere für eine kraft- und/oder formschlüssige Übertragung von Betätigungskräften auf die Kopplungselemente ausgelegt. Eine Ansteuerung der Betätigungsvorrichtung kann durch Ansteuerkräfte in axialer und/oder in radialer Richtung vorgenommen werden.

In weiterer Ausgestaltung der Erfindung ist die Betätigungsvorrichtung für die Ausübung radialer Kräfte auf die Kopplungselemente vorgesehen. Dadurch kann beispielsweise eine zuverlässige Verbindung der Kopplungselemente mit dem Zugrohradapter bewirkt werden, da die Haltekräfte in radialer Richtung den Formschluss zwischen den Kopplungselementen und dem Zugrohradapter bewirken. Axiale Kraftkomponenten, die über die Kopplungselemente auf die Zugeinrichtung übertragen werden, führen insbesondere zur Erhöhung einer Reibkraft der Kopplungselemente in den Führungen der Zugeinrichtung, wodurch eine zusätzliche Verstärkung der Haltekräfte der Kopplungselemente verwirklicht ist.

In weiterer Ausgestaltung der Erfindung ist die Betätigungsvorrichtung zumindest abschnittsweise als Konus ausgeführt, der zumindest zeitweilig mit korrespondierenden Flächen der Kopplungselemente in Wirkverbindung steht. Dadurch lässt sich eine besonders vorteilhafte Umsetzung einer linearen Bewegung der Zugeinrichtung in radiale Bewegungen der zugeordneten Kopplungselemente verwirklichen. Je nach Ausgestaltung des Konus und der korrespondierenden Flächen der Kopplungselemente lässt sich eine selbsthemmende Wirkverbindung zwischen Betätigungsvorrichtung und Kopplungselementen realisieren. Damit wird verhindert, dass bei der Benutzung der Innenspanneinrichtung auftretende, den Haltekräften der Kopplungselemente entgegengerichtete Reaktionskräfte zu einem Ausweichen der Betätigungsvorrichtung und einer damit verbundenen Entriegelung der Innenspanneinrichtung von dem Zugrohradapter des Spannfutters führen.

In weiterer Ausgestaltung der Erfindung ist der Zugbolzen für eine Ansteuerung der Betätigungsvorrichtung vorgesehen. Dadurch kann eine An- oder Abkopplung der Innenspanneinrichtung von dem Zugrohradapter durch eine entsprechende Verstellung des Zugbolzens bewirkt werden. Der Zugbolzen steht in Wirkverbindung mit der Betätigungsvorrichtung und bewirkt somit eine Bewegung der Kopplungselemente in oder gegen eine Verriegelungsrichtung mit dem Zugrohradapter. Dabei kann in Abhängigkeit einer Verstellposition des Zugbolzens eine Kraft-und/oder Bewegungsübertragung auf die Betätigungsvorrichtung stattfinden, wodurch die gewünschte Ver- oder Entriegelung der Kopplungselemente mit dem Zugrohradapter über die Betätigungsvorrichtung bewirkt werden kann.

In weiterer Ausgestaltung der Erfindung ist die Zugeinrichtung an Führungseinrichtungen des Spindelflanschs in Richtung einer Mittellängsachse zwischen einer Spannposition und einer Auswerfposition verschiebbar vorgesehen. Durch die Kopplung der Zugeinrichtung mit dem Zugbolzen kann dadurch in der Spannposition eine Zugkraft von der Zugeinrichtung auf den Zugbolzen und damit auf die Segmentspanneinrichtung hervorgerufen werden. Diese Zugkraft führt zu einer Bewegung der Segmentspanneinrichtung auf den zumindest abschnittsweise konischen Aufnahmedorn. Somit kann eine Durchmesservergrößerung der Segmentspanneinrichtung zur Spannung von Werkstücken hervorrufen werden. In einer Auswerfposition wird der Zugbolzen durch die Zugeinrichtung durch Druckkräfte in entgegengesetzter Richtung bewegt, so dass die Zugkraft auf die Segmentspanneinrichtung reduziert wird und ein Abspannen des Werkstücks ermöglicht wird. Eine Beweglichkeit der Zugeinrichtung ist insbesondere entlang einer Mittellängsachse des Spindelflansches vorgesehen, wodurch eine besonders vorteilhafte Kraftaufbringung auf den Zugbolzen und damit auf die Segmentspanneinrichtung verwirklicht werden kann.

In weiterer Ausgestaltung der Erfindung sind für eine Positionierung der Zugeinrichtung in der Spannposition oder der Auswerfposition Federmittel vorgesehen. Damit kann eine Vorzugsposition der Zugeinrichtung festgelegt werden, die bei Fehlen von anderen Betätigungskräften zu einer eindeutigen Lage der Zugeinrichtung führt und somit insbesondere eine Montage oder Demontage der Innenspanneinrichtung erleichtert.

In weiterer Ausgestaltung der Erfindung ist an der Zugeinrichtung zumindest eine Auswerfereinrichtung angebracht, die zumindest zeitweilig mit der Segmentspanneinrichtung in Verbindung steht. Durch die Auswerfereinrichtung kann eine Kraft in entgegengesetzter Richtung zu einer über den Zugbolzen auf die Segmentspanneinrichtung aufgebrachten Zugkraft aufgebracht werden. Dadurch wird die Segmentspanneinrichtung von dem konischen Aufnahmedorn gedrückt und somit eine Verringerung des effektiven Außendurchmessers der Segmentspanneinrichtung erzielt. Mit der Auswerfereinrichtung können auch flache Keilwinkel zwischen dem Aufnahmedorn und den korrespondierenden Spannsegmenten verwirklicht werden, was in Anbetracht einer zwischen Aufnahmedorn und Spannsegmenten auftretenden Reibung eine Selbsthemmung hervorrufen kann. Dadurch kann eine besonders sichere Einspannung des Werkstücks erzielt werden. Zudem kann durch einen flachen Keilwinkel ein besonders langer, linearer Spannweg der Segmentspanneinrichtung auf dem Aufnahmedorn erzielt werden, wodurch zu spannende Werkstücke in axialer Richtung zuverlässig gegen einen Anschlag gespannt werden können. Die Auswerfereinrichtung, die an der Zugeinrichtung vorgesehen ist, übt eine Druckkraft in Richtung der Mittellängsachse der Innenspanneinrichtung auf die Segmentspanneinrichtung aus und bewirkt somit auch bei selbsthemmender Auslegung des Keilwinkels der Segmentspanneinrichtung und des Aufnahmedorns eine Zwangsbewegung zum Abspannen des Werkstücks.

In weiterer Ausgestaltung der Erfindung ist zwischen der Auswerfereinrichtung und der Segmentspanneinrichtung ein Auswerferring für eine gleichmäßige Kraftbeaufschlagung der Segmentspanneinrichtung vorgesehen. Durch den Auswerferring kann somit eine punktuelle Be- bzw. Überlastung der Segmentspanneinrichtung vermieden werden, weiterhin wird dadurch auch ein Verkanten der Segmentspanneinrichtung auf dem Aufnahmedorn verhindert, da eine Druckkraft verteilt über die gesamte axiale Stirnfläche der Segmentspanneinrichtung ausgeübt wird. Insbesondere kann durch den Auswerferring eine Beschädigung der anvulkanisierten Gummielemente zwischen den Spannsegmenten verhindert werden.

In weiterer Ausgestaltung der Erfindung ist der Zugbolzen für die Ausübung einer Stellkraft auf die Betätigungsvorrichtung in Richtung seiner Mittellängsachse vorgesehen. Dadurch lässt sich eine besonders vorteilhafte, homogene und symmetrische Druckkraftübertragung von dem Zugbolzen auf die Betätigungsvorrichtung erzielen, wodurch die Kopplungselemente zwischen der Ruheposition und der Funktionsposition beweglich sind. Darüber hinaus ist eine Zugkraftübertragung nur möglich, wenn der Zugbolzen die Betätigungsvorrichtung so ansteuert, dass die Kopplungselemente in radialer Richtung in Kontakt mit dem Zugrohradapter treten.

In weiterer Ausgestaltung der Erfindung ist an dem Zentrierdorn ein Konusring mit Wälzkörpern für eine reibungsarme und zentrische Abstützung an einem Aufnahmekonus des Spannfutters angebracht. Durch den Konusring mit Wälzkörpern wird eine Reibung zwischen dem Zentrierdorn und einem Aufnahmekonus des Spannfutters reduziert, wodurch wird ein einfacheres Montieren und Demontieren ermöglicht wird. Außerdem kann dadurch der Einfluss von Verschmutzungen auf den Zentrierdorn und/oder dem Aufnahmekonus des Spannfutters reduziert werden, da die Wälzkörper Schmutzpartikel auf dem Aufnahmekonus des Spannfutters verdrängen können. Der Konusring stellt somit eine zentrische und rundlaufgenaue Ausrichtung der Innenspanneinrichtung gegenüber dem Spannfutter sicher. Darüber hinaus werden auch Anhaftungseffekte des Zentrierdorns an dem Aufnahmekonus des Spannfutters, die bei längerer Anbringung der Innenspanneinrichtung an dem Spannfutter auftreten können und insbesondere durch Verharzen von Ölen oder Fetten oder durch Korrosion auftreten können, auf ein Minimum reduziert.

Die der Erfindung zugrundeliegende Aufgabe wird auch durch ein Spannsystem mit einem Spannfutter, das eine Schnittstelle zur Befestigung an einer Arbeitsspindel sowie eine Adaptereinrichtung für ein Zugrohr der Arbeitsspindel aufweist, und mit einer Innenspanneinrichtung gemäß der Erfindung ausgerüstet ist, gelöst. Ein derartiges Spannsystem basiert insbesondere auf einem Spannfutter, das für Segmentspanneinrichtungen zur Außenspannung und/oder für Spannzangen vorgesehen ist und das durch die erfindungsgemäße Innenspanneinrichtung auch für entsprechende Innenspannanwendungen verwendbar gemacht wird. Das Spannfutter weist eine Schnittsstelle zur Befestigung an einer Arbeitsspindel auf, die insbesondere als Kombination aus einem Stirnflansch und einer Konusaufnahme ausgeführt sein kann. Weiterhin ist an dem Spannfutter eine Adaptereinrichtung für ein Zugrohr der Arbeitsspindel vorgesehen, die eine Übertragung der vom Zugrohr ausgeübten Zug- und/oder Druckkräfte auf eine Innen- oder Außenspanneinrichtung des Spannfutters ermöglicht. Somit dient das Spannfutter als Adapterstück zwischen der Arbeitsspindel und der Innenspanneinrichtung, wobei durch die strukturellen Eigenschaften des Spannfutters und der Innenspanneinrichtung eine schnelle Montage/Demontage der Innenspanneinrichtung bei einem minimalen Rundund Planlauffehler bewirkt werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und aus anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: zeigt in isometrischer Darstellung eine Vorderansicht einer In- nenspanneinrichtung,
- Fig. 2: in isometrischer Darstellung eine rückseitige Ansicht der Innen- spanneinrichtung gemäß der Fig. 1,
- Fig. 3: in ebener Darstellung eine Vorderansicht der erfindungsgemä- ßen Innenspanneinrichtung,
- Fig. 4: in ebener Schnittdarstellung die Innenspanneinrichtung nach Fig. 3 und
- Fig. 5: eine Schnittdarstellung eines erfindungsgemäßen Spannsystems mit einer Innenspanneinrichtung sowie mit einem Spannfutter zur Aufnahme der Innenspanneinrichtung.

### Detaillierte Beschreibung der Ausführungsbeispiele

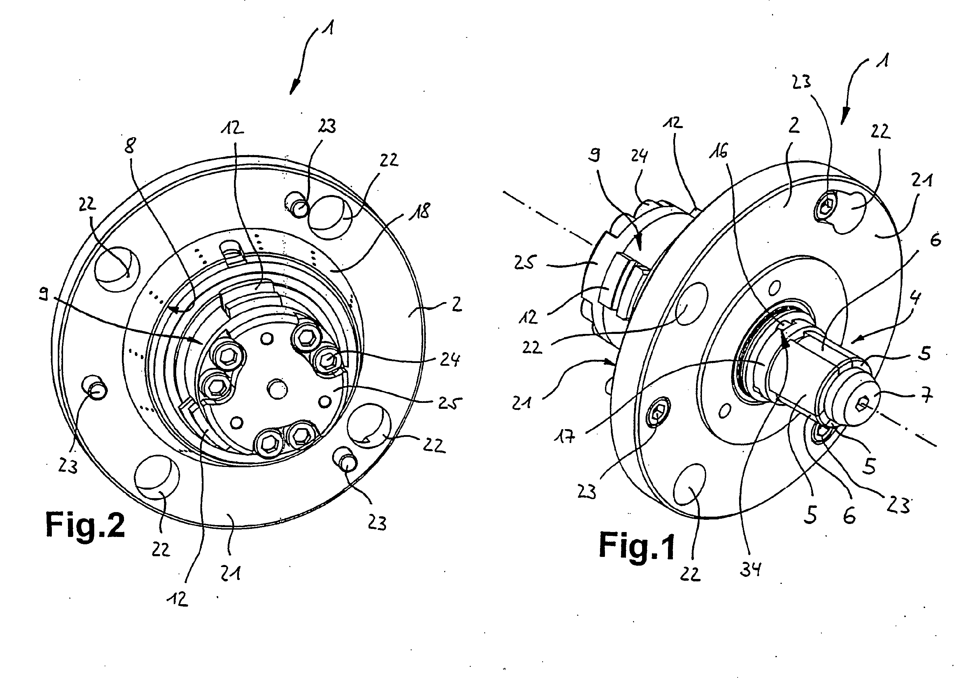

Wie in Fig. 1 dargestellt, ist an einem Spindelflansch 2, der im wesentlichen als zylindrische Scheibe ausgeführt ist, eine Segmentspanneinrichtung 4 vorgesehen, die aus gestaltfesten Spannsegmenten 5 sowie aus Gummielementen 6 aufgebaut ist. Die Gummielemente 6 sind dabei stirnseitig an in etwa radial verlaufenden Schnittflächen der Spannsegmente 5 anvulkanisiert. An einer Stirnseite der Segmentspanneinrichtung 4 greift flächig ein umlaufender Bund des Zugbolzens 7 an, der für eine Ausübung einer Betätigungskraft auf die Segmentspanneinrichtung 4 vorgesehen ist. An einer dem Zugbolzen 7 abgewandten, axialen Stirnseite der Segmentspanneinrichtung 4 ist ein Auswerferring 17 vorgesehen, der flächig mit der Stirnseite der Segmentspanneinrichtung 4 in Wirkverbindung steht. Der Auswerferring 17 ist durch eine Auswerfereinrichtung 16 in axialer Richtung ansteuerbar und bewirkt eine Bewegung der Segmentspanneinrichtung 4 entgegengesetzt zu einer Zugrichtung des Zugbolzens 7.

An einer dem Zugbolzen 7 und der Segmentspanneinrichtung 4 abgewandten Seite des Spindelflansches 2 sind in Fig. 1 Kopplungselemente 12 dargestellt, die in radialer Richtung aus Führungsschlitzen eines Grundkörpers 26 einer Zugeinrichtung 9 ausfahrbar sind. Der Spindelflansch 2 weist an beiden axialen Stirnseiten kreisringförmige Planflächen 21 auf, die zur planen Anlage von bzw. an entsprechenden Aufnahmeeinrichtungen, wie insbesondere einem Spannfutter, vorgesehen sind. Weiterhin weist der Spindelflansch 2 mehrere Durchgangsbohrungen auf, die für eine Zugänglichkeit von nicht dargestellten Betätigungsschrauben eines ebenfalls nicht dargestellten Spannfutters vorgesehen sein können. Darüber hinaus sind an dem Spindelflansch 2 drei Befestigungsschrauben 23 vorgesehen, die eine Befestigung des Spindelflansches an dem nicht dargestellten Spannfutter ermöglichen.

Die in Fig. 2 in isometrischer Ansicht dargestellte Rückseite der Innenspanneinrichtung 1 zeigt den mit einem Konusring 18 nahezu vollständig abgedeckten Zentrierdorn 8 und die beweglich am Spindelflansch 2 vorgesehene Zugeinrichtung 9, die eine mit Zugschrauben 24 befestigte Abschlussplatte 25, die Kopplungselemente 12 sowie einen Grundkörper 26 aufweist.

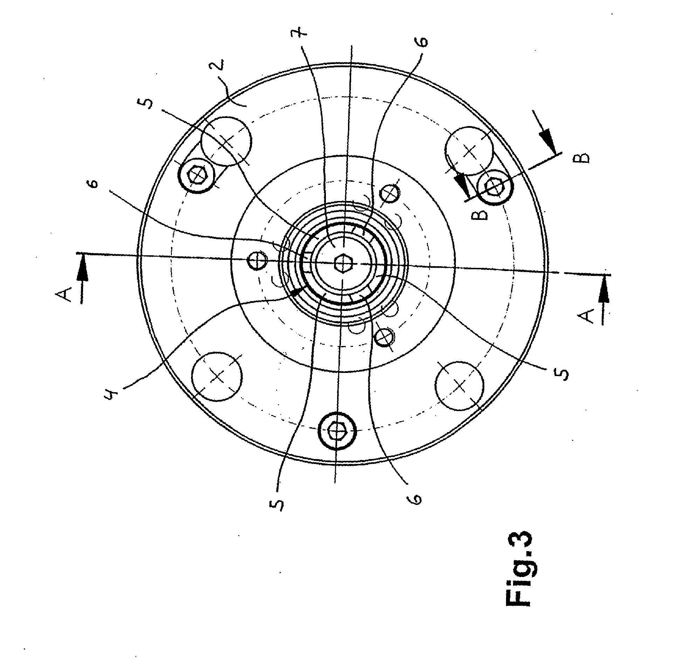

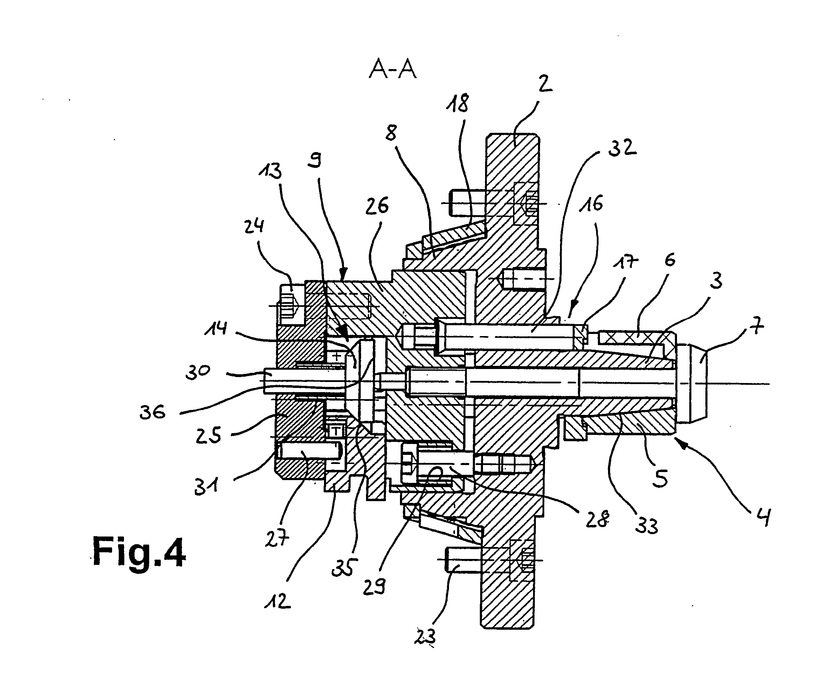

In der Darstellung gemäß Fig. 3 ist die zentrische Lage des Zugbolzens 7 und der Segmentspanneinrichtung 4 zum Spindelflansch 2 erkennbar. Die Segmentspanneinrichtung 4 weist drei Spannsegmente 5 und drei Gummielemente 6 auf, die symmetrisch jeweils um 120° versetzt angeordnet sind. Gemäß dem Schnitt A-A, dessen Verlauf in Fig. 3 dargestellt ist und der in Fig. 4 abgebildet ist, wird ersichtlich, wie der Zugbolzen 7 mit seinem umlaufenden Bund flächig an den Spannsegmenten 5 anliegt, die durch die Gummielemente 6 elastisch miteinander verbunden sind. An einer konischen Innenfläche 33 der Spannsegmente 5 ist ein flächiger Formschluss mit dem Aufnahmedorn 3 vorgesehen, der eine mit den Spannsegmenten 5 korrespondierende Konusgeometrie aufweist. An einer dem Zugbolzen 7 abgewandten Stirnseite weist die Segmentspanneinrichtung 4 einen stirnseitigen, flächigen Kontakt mit dem Auswerferring 17 der Auswerfereinrichtung 16 auf. Die Auswerfereinrichtung 16 weist weiterhin mehrere, zirkular verteilte Auswerferstangen 32 auf, die in dem Spindelflansch 2 verschieblich gelagert sind und in eine Sicherungsnut 34, wie sie in Fig. 1 erkennbar ist, eingreifen. Durch die Sicherungsnut 34, die in Wirkverbindung mit den Auswerferstangen 32 steht, kann eine Rotationsbewegung des Auswerferrings 17 verhindert werden, dadurch wird bei Klemmung eines Werkstücks durch die Innenspanneinrichtung auch die Gefahr eines Durchrutschens der Segmentspanneinrichtung 4 auf dem Aufnahmedorn durch stirnseitige und zirkulare Reibkräfte reduziert.

Die Auswerferstange 32 ist fest mit dem Grundkörper 26 der Zugeinrichtung 9 verbunden, wobei insbesondere Vorkehrungen an der Auswerferstange 32 und am Grundkörper 26 im Hinblick auf eine Druckbelastung der Auswerferstange 32 getroffen sind.

Der Grundkörper 26 wird über Führungsschrauben 28 schiebebeweglich gegenüber dem Spindelflansch 2 gelagert, wobei eine Außengeometrie des Grundkörpers 26 in eine entsprechend gestaltete Ausdrehung des Spindelflansches 2 aufgenommen ist. Der Grundkörper 26 ist gegenüber den Führungsschrauben 28 mittels Federelementen 29 vorgespannt, so dass eine Tendenz zur Einnahme einer Ruheposition besteht. In der Ruheposition übt der Zugbolzen 7 keine Zugkräfte auf die Segmentspanneinrichtung aus, während die Auswerferstangen 32 eine Druckkraft auf den Auswerferring 17 und damit auf die Segmentspanneinrichtung 4 ausüben, um diese in eine entspannte und für die Gummielemente 6 nahezu kraftlose Ruheposition zu bringen. Zwischen dem Grundkörper 26 und der Abschlussplatte 25 sind die Kopplungselemente 12 in radialer Richtung schiebebeweglich gelagert, wobei eine Ausschlagbegrenzung der Kopplungselemente 12 durch einen in axialer Richtung in die Abschlussplatte 25 eingepressten Haltebolzen 27 verwirklicht ist. Dabei stehen Schrägflächen 35 der Kopplungselemente 12 in Wirkverbindung mit einer konischen Mantelfläche des Konus 14 der Betätigungsvorrichtung 13, der Konus weist darüber hinaus einen einstückig angebrachten Führungsstab 30 auf, der in einer Führungsbohrung der Abschlussplatte 25 geführt ist.

Die Betätigungsvorrichtung 13 weist weiterhin eine Rückstellfeder 31 auf, die entgegen einer vom Zugbolzen 7 aufgebrachten, statischen Druckkraft eine Rückstellbewegung der Betätigungsvorrichtung 13 in Richtung des Aufnahmedorns 3 hervorruft. Dadurch kann bei Reduzierung einer Druckkraft des Zugbolzens auf eine Konusstirnfläche 36 der Betätigungsvorrichtung 13 eine Bewegung in Richtung des Aufnahmedorns 3 stattfinden. Die Rückstellung der Kopplungselemente 12 wird damit in radialer Richtung nach innen ermöglicht, wobei dazu nicht dargestellte, am Umfang zwischen den einzelnen Kopplungselementen 12 angebrachte Radialfedern vorgesehen sind.

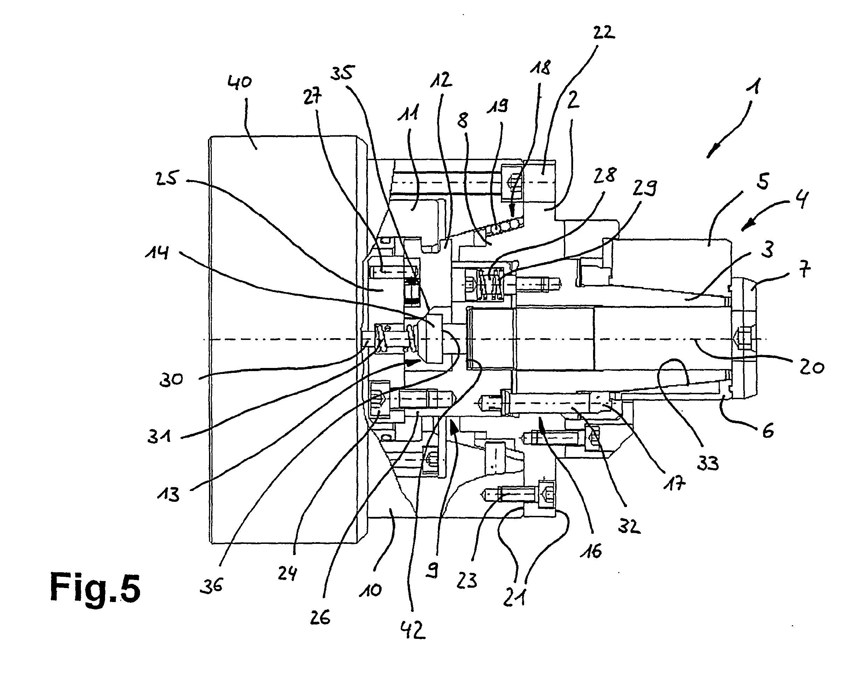

Bei der Darstellung gemäß Fig. 5 ist erkennbar, wie die Innenspanneinrichtung 1 an einem Spannfutter 10 angebracht ist, wobei die Wälzkörper 19 des Konusrings 18 in formschlüssigem Kontakt mit einem Aufnahmekonus 37 des Spannfutters 10 in Wirkverbindung stehen. Weiterhin ist vorgesehen, dass die dem Zentrierdorn 8 zugewandte Planfläche 21 plan auf einer Spannfutterstirnfläche 38 anliegt. Die Kopplungselemente 12 werden durch den Konus 14 radial nach außen gepresst und gehen eine formschlüssige Verbindung mit einem nach innen gewandten, umlaufenden Bund eines Zugrohradapters 39 ein.

Für eine Bewegung der Kopplungselemente 12 in eine formschlüssig mit dem Zugrohradapter 11 verriegelte Position wird von dem Zugbolzen 7 eine Druckkraft auf die Konusstirnfläche 36 ausgeübt, die zu einer Bewegung der Betätigungsvorrichtung 13 führt, wobei durch eine Wirkverbindung zwischen dem Konus 14 und den Schrägflächen 35 der Kopplungselemente 12 die gewünschte radiale Linearbewegung der Kopplungselemente erzielt wird.

Für eine Nutzung der Innenspanneinrichtung sind folgende Schritte vorgesehen: zunächst wird ein Spannfutter 10 mittels Halteschrauben 41 fest auf einer Arbeitsspindel 40 angebracht und in bekannter Weise zentrisch und axial ausgerichtet. Anschließend wird die Innenspanneinrichtung 1, vorzugsweise ohne Segmentspanneinrichtung 4 und ohne Zugbolzen 7, in den Aufnahmekonus 37 des Spannfutters 10 eingesetzt und mit den Befestigungsschrauben 23 fest an dem Spannfutter 10 angebracht. Dabei wirken der Aufnahmekonus 37, der Konusring 18 und die Wälzkörper 19 zusammen mit dem Zentrierdorn 8 des Spindelflansches 2 so zusammen, dass eine reproduzierbare und hochgenaue Zentrierung des Spindelflansches 2 an dem Spannfutter 10 erreicht werden kann. In dieser Ausgangslage ist der Konus 14 bedingt durch die Druckkräfte der Rückstellfeder 31 in eine Ruheposition verbracht, ebenso liegt die Zugeinrichtung 9 mit ihrer Stirnfläche flächig an einer Innenfläche des Spindelflansches 2 an, was durch die Federelemente 29 der Führungsschrauben 28 bewirkt wird.

In einem nachfolgenden Schritt wird die Segmentspanneinrichtung 4 locker von Hand auf den Aufnahmedorn 3 aufgeschoben und der Zugbolzen 7 in die entsprechende Bohrung des Aufnahmedorns gesteckt. Ein Gewindeabschnitt des Zugbolzens 7 tritt in formschlüssige Wirkverbindung mit einem im Grundkörper 26 vorgesehenen Gewinde, so dass bei Rotation des Zugbolzens 7 in Schraubrichtung eine kombinierte rotatorische und translatorische Bewegung in Richtung des Konus 14 durchgeführt wird. Dabei ist der Zugbolzen so dimensioniert, dass ein Druckstempel 42, der auf die Konusstirnfläche 36 drückt, den Konus 14 aus der Ruheposition entgegen der Rückstellkraft der Rückstellfeder 31 bewegt, wodurch die Schrägflächen 35 der Kopplungselemente 12 an der konusförmigen Mantelfläche des Konus 14 entlang gleiten und durch Keilkräfte radial nach außen gedrückt werden. Dadurch kommt der gewünschte Formschluss der Kopplungselemente 11 mit dem nach innen gerichteten, umlaufenden Bund des Zugrohradapters 39 zustande, wobei der Zugrohradapter an einer nicht näher dargestellten Schnittstelle mit einem insbesondere hydraulischen betätigbaren Zugrohr der Arbeitsspindel 40 gekoppelt ist.

Sobald die Kopplungselemente 12 den formschlüssigen Eingriff zu dem Zugrohradapter 11 hergestellt haben, ist die Innenspanneinrichtung betriebsbereit, ein Werkstück kann mit seiner Innenkontur auf die Segmentspanneinrichtung 4 aufgesetzt werden. Durch Ausüben einer Zugkraft über das nicht dargestellte Zugrohr auf den Zugrohradapter 11 und von dort auf die Zugeinrichtung 9 wird eine Zugkraft auf den Zugbolzen 7 ausgeübt, der seinerseits die Segmentspanneinrichtung 4 auf den Aufnahmedorn 3 presst. Mittels der dadurch auftretenden Keilkräfte erfolgt eine Aufweitung des Durchmessers der Segmentspanneinrichtung 4. Somit kann eine kraft- und/oder formschlüssige Klemmung einer Innengeometrie des Werkstücks mit hoher Rundlaufgenauigkeit und einer durch eine axiale Verschiebebewegung der Segmentspanneinrichtung hervorgerufene axialen Positionierung des Werkstücks erzielt werden kann.

Nach Beendigung einer an den Klemmvorgang anschließenden Bearbeitung des Werkstücks kann, insbesondere durch hydraulische Stellkräfte, eine Druckkraft auf die Zugstange der Arbeitsspindel 40 ausgeübt werden. Diese Druckkraft wird über den Zugrohradapter 11 auf die Kopplungselemente 12 und damit auf die Zugeinrichtung übertragen. Dadurch wird einerseits der Zugbolzen 7, der im Grundkörper der Zugeinrichtung 9 verschraubt ist und flächig an der Anbindungsstelle des Druckstempels 42 gegenüber dem Grundkörper anliegt, mit einer Druckkraft beaufschlagt und entfernt sich von der Segmentspanneinrichtung 4. Zudem wird die Druckkraft auch auf die Auswerferstangen 32 ausgeübt, die ihrerseits diese Druckkraft auf den Auswerferring 17 ableiten. Dadurch kommt es zu einer Druckkraft auf die Segmentspanneinrichtung, die in Richtung der Verjüngung des Aufnahmedorns 3 gepresst wird und somit eine Durchmesserreduktion erfährt. Damit kann das von der Innenspanneinrichtung aufgenommene Werkstück abgespannt und abgenommen werden.

In einer nicht dargestellten Ausführungsform der Erfindung ist anstelle des Konus 14 eine Nockenscheibe vorgesehen, der Zugbolzen 7 wird mittels eines Bajonettverschlusses in den Grundkörper 26 der Betätigungsvorrichtung 13 verriegelt und betätigt dabei die Nockenscheibe, die ihrerseits mit Erhöhungen und Vertiefungen versehen ist, um in einem begrenzten Drehwinkelbereich ein formschlüssiges oder kraftschlüssiges, d.h. zwangsgesteuertes oder zwangfreies Ein- und Ausfahren der Kopplungselemente zu 12 bewirken.

## Patentansprüche

1. Innenspanneinrichtung mit:
- einem Spindelflansch (2), der einen stirnseitig angebrachten, zumindest abschnittsweise konischen Aufnahmedorn (3) aufweist,
- einer auf dem Aufnahmedorn (3) zwischen einer Ruheposition und einer Funktionsposition bewegbaren Segmentspanneinrichtung (4), die zumindest zwei elastisch miteinander gekoppelte, gestaltfeste Spannsegmente (5) aufweist,
- einem Zugbolzen (7) zur Übertragung von Betätigungskräften auf die Segmentspanneinrichtung (4) **gekennzeichnet durch**
- einen zumindest abschnittsweise kegelstumpfförmigen Zentrierdorn (8), der an einer dem Aufnahmedorn (3) abgewandten Stirnseite des Spindelflanschs (2) angebracht ist.

2. Innenspanneinrichtung nach Anspruch 1, **dadurch gekennzeichnet, dass** der Zugbolzen (7) mit einer Zugeinrichtung (9) verbunden ist, die eine Schnittstelle für die Ankopplung eines in einem Spannfutter (10) vorgesehenen Zugrohradapters (11) aufweist.

3. Innenspanneinrichtung nach Anspruch 2, **dadurch gekennzeichnet, dass** an der Zugeinrichtung (9) zwischen einer Montageposition und einer Funktionsposition bewegbare Kopplungselemente (12) für eine Wirkverbindung mit dem Zugrohradapter (11) vorgesehen sind.

4. Innenspanneinrichtung nach Anspruch 3, **dadurch gekennzeichnet, dass** die Kopplungselemente (12) in radialer Richtung verschieblich an der Zugeinrichtung (9) angebracht sind.

5. Innenspanneinrichtung nach Anspruch 3 oder 4, **dadurch gekennzeichnet, dass** die Kopplungselemente (12) jeweils zumindest eine formschlüssig wirkende Riegelgeometrie aufweisen.

6. Innenspanneinrichtung nach einem der Ansprüche 3 bis 5, **dadurch gekennzeichnet, dass** eine mit den Kopplungselementen (12) wirkverbundene Betätigungsvorrichtung (13) vorgesehen ist.

7. Innenspanneinrichtung nach Anspruch 6, **dadurch gekennzeichnet, dass** die Betätigungsvorrichtung (13) für die Ausübung radialer Kräfte auf die Kopplungselemente (12) vorgesehen ist.

8. Innenspanneinrichtung nach Anspruch 7, **dadurch gekennzeichnet, dass** die Betätigungsvorrichtung (13) zumindest abschnittsweise als Konus (14) ausgeführt ist, der zumindest zeitweilig mit korrespondierenden Flächen der Kopplungselemente (12) in Wirkverbindung steht.

9. Innenspanneinrichtung nach einem der Ansprüche 6 bis 8, **dadurch gekennzeichnet, dass** der Zugbolzen (7) für eine Ansteuerung der Betätigungsvorrichtung (13) vorgesehen ist.

10. Innenspanneinrichtung nach einem der Ansprüche 2 bis 9, **dadurch gekennzeichnet, dass** die Zugeinrichtung (9) an Führungseinrichtungen (28) des Spindelflanschs (2) in Richtung einer Mittellängsachse (20) zwischen einer Spannposition und einer Auswerferposition verschiebbar vorgesehen ist.

11. Innenspanneinrichtung nach Anspruch 10, **dadurch gekennzeichnet, dass** für eine Positionierung der Zugeinrichtung (9) in der Spannposition oder der Auswerferposition Federmittel (29) vorgesehen sind.

12. Innenspanneinrichtung nach einem der Ansprüche 2 bis 11, **dadurch gekennzeichnet, dass** an der Zugeinrichtung (9) zumindest eine Auswerfereinrichtung (32) angebracht ist, die zumindest zeitweilig mit der Segmentspanneinrichtung (4) in Verbindung steht.

13. Innenspanneinrichtung nach Anspruch 12, **dadurch gekennzeichnet, dass** zwischen der Auswerfereinrichtung (16) und der Segmentspanneinrichtung (4) ein Auswerferring (17) für eine gleichmäßige Kraftbeaufschlagung der Segmentspanneinrichtung (4) vorgesehen ist.

14. Innenspanneinrichtung nach einem der Ansprüche 6 bis 13, **dadurch gekennzeichnet, dass** der Zugbolzen (7) für die Ausübung einer Stellkraft auf die Betätigungsvorrichtung (13) in Richtung seiner Mittellängsachse (20) vorgesehen ist.

15. Innenspanneinrichtung nach einem der vorhergehenden Ansprüche, **dadurch gekennzeichnet, dass** an dem Zentrierdorn (8) ein Konusring (18) mit Wälzkörpern (19) für eine reibungsarme und zentrische Abstützung an einem Aufnahmekonus des Spannfutters (10) angebracht ist.

16. Spannsystem mit einem Spannfutter (10), das eine Schnittstelle zur Befestigung an einer Arbeitsspindel (40) sowie eine Adaptereinrichtung für ein Zugrohr der Arbeitsspindel (40) aufweist, und mit einer Innenspanneinrichtung nach einem der vorhergehenden Ansprüche zur Anbringung an dem Spannfutter (10).

## Claims

1. Inner chucking device comprising:
- a spindle flange (2) which has an at least partly conical mounting mandrel (3) attached at the end face,
- a segmented chucking device (4) which is movable on the mounting mandrel (3) between a rest position and an operational position and has at least two dimensionally stable chucking segments (5) coupled to one another elastically,
- a draw bolt (7) for transmitting actuating forces to the segmented chucking device (4), **characterized by**
- an at least partly frustoconical centring mandrel (8) which is attached to an end face of the spindle flange (2) facing away from the mounting mandrel (3).

2. Inner chucking device according to Claim 1, **characterized in that** the draw bolt (7) is connected to a draw device (9) which has an interface for coupling a draw tube adapter (11) provided in a chuck (10).

3. Inner chucking device according to Claim 2, **characterized in that** coupling elements (12) movable between a fitted position and an operational position for interacting with the draw tube adapter (11) are provided on the draw device (9).

4. Inner chucking device according to Claim 3, **characterized in that** the coupling elements (12) are attached to the draw device (9) in a radially displaceable manner.

5. Inner chucking device according to Claim 3 or 4, **characterized in that** the coupling elements (12) each have at least one locking geometry acting in a form-fitting manner.

6. Inner chucking device according to one of Claims 3 to 5, **characterized in that** an actuating device (13) operatively connected to the coupling elements (12) is provided.

7. Inner chucking device according to Claim 6, **characterized in that** the actuating device (13) is provided for exerting radial forces on the coupling elements (12).

8. Inner chucking device according to Claim 7, **characterized in that** the actuating device (13) is designed at least partly as a cone (14) which is in operative connection, at least temporarily, with corresponding surfaces of the coupling elements (12).

9. Inner chucking device according to one of Claims 6 to 8, **characterized in that** the draw bolt (7) is provided for activating the actuating device (13).

10. Inner chucking device according to one of Claims 2 to 9, **characterized in that** the draw device (9) is provided on guide devices (28) of the spindle flange (2) in such a way as to be displaceable in the direction of a centre longitudinal axis (20) between a chucking position and an ejecting position.

11. Inner chucking device according to Claim 10, **characterized in that** spring means (29) are provided for positioning the draw device (9) in the chucking position or the ejecting position.

12. Inner chucking device according to one of Claims 2 to 11, **characterized in that** at least one ejector device (16) is attached to the draw device (9), said ejector device (16) being at least temporarily connected to the segmented chucking device (4).

13. Inner chucking device according to Claim 12, **characterized in that** an ejector ring (17) for uniformly applying force to the segmented chucking device (4) is provided between the ejector device (16) and the segmented chucking device (4).

14. Inner chucking device according to one of Claims 6 to 13, **characterized in that** the draw bolt (7) is provided for exerting an actuating force on the actuating device (13) in the direction of its centre longitudinal axis (20).

15. Inner chucking device according to one of the preceding claims, **characterized in that** a cone ring (18) having rolling elements (19) for low-friction and central support on a mounting cone of the chuck (10) is attached to the centring mandrel (8).

16. Chucking system comprising a chuck (10) which has an interface for fastening to a work spindle (40) and an adapter device for a draw tube of the work spindle (40), and comprising an inner chucking device according to one of the preceding claims for attaching to the chuck (10).

## Revendications

1. Dispositif de serrage intérieur avec :
- un faux-plateau (2), qui présente un mandrin porte-pièce (3) appliqué sur la face et au moins en partie conique,
- un dispositif de serrage à segments (4), déplaçable sur un mandrin porte-pièce (3) entre une position de repos et une position opérationnelle, qui présente au moins deux segments de serrage (5) à forme stable et couplés élastiquement entre eux,
- un boulon d'assemblage (7) pour la transmission de forces d'actionnement au dispositif de serrage à segments (4), **caractérisé par**
- un mandrin de centrage (8) au moins en partie tronconique, qui est appliqué à une face frontale, à l'opposé du mandrin porte-pièce (3), du faux-plateau (2).

2. Dispositif de serrage intérieur d'après la revendication 1, **caractérisé en ce que** le boulon d'assemblage (7) est raccordé à un dispositif de traction (9), qui présente une jonction pour le couplage d'un adaptateur de tube de traction (11) prévu dans un mandrin de serrage (10).

3. Dispositif de serrage intérieur d'après la revendication 2, **caractérisé en ce qu'**auprès du dispositif de traction (9) on prévoit des éléments de couplage (12) déplaçables entre une position de montage et une position opérationnelle pour un lien opératoire avec l'adaptateur de tube de traction (11).

4. Dispositif de serrage intérieur d'après la revendication 3, **caractérisé en ce qu'**en direction radiale les éléments de couplage (12) sont appliqués de manière déplaçable auprès du dispositif de traction (9).

5. Dispositif de serrage intérieur d'après la revendication 3 ou 4, **caractérisé en ce que** les éléments de couplage (12) présentent respectivement au moins une géométrie de verrouillage agissant à engagement positif.

6. Dispositif de serrage intérieur d'après une des revendications de 3 à 5, **caractérisé en ce qu'**on prévoit un dispositif d'actionnement (13) conjugué de manière opérationnelle aux éléments de couplage (12).

7. Dispositif de serrage intérieur d'après la revendication 6, **caractérisé en ce que** le dispositif d'actionnement (13) est prévu pour exercer des forces radiales sur les éléments de couplage (12).

8. Dispositif de serrage intérieur d'après la revendication 7, **caractérisé en ce que** le dispositif d'actionnement (13) est réalisée au moins partiellement sous forme de cône (14), qui est conjugué de manière opérationnelle au moins temporairement à des surfaces correspondantes des éléments de couplage (12).

9. Dispositif de serrage intérieur d'après une des revendications de 6 à 8, **caractérisé en ce que** le boulon d'assemblage (7) est prévu pour un pilotage du dispositif d'actionnement (13).

10. Dispositif de serrage intérieur d'après une des revendications de 2 à 9, **caractérisé en ce que** le dispositif de traction (9) est prévu auprès de dispositifs de guidage (28) du faux-plateau (2) en direction d'une ligne longitudinale médiane (20) de manière déplaçable entre une position de serrage et une position d'éjection.

11. Dispositif de serrage intérieur d'après la revendication 10, **caractérisé en ce qu'**on prévoit des moyens à ressort (29) pour un positionnement du dispositif de traction (9) dans la position de serrage ou dans la position d'éjection.

12. Dispositif de serrage intérieur d'après une des revendications de 2 à 11, **caractérisé en ce qu'**au moins un dispositif d'éjection (32) est appliqué au dispositif de traction (9) et il est raccordé au moins temporairement au dispositif de serrage à segments (4).

13. Dispositif de serrage intérieur d'après la revendication 12, **caractérisé en ce qu'**entre le dispositif d'éjection (16) et le dispositif de serrage à segments (4) on prévoit une bague d'éjection (17) pour qu'une force puisse être exercée de manière uniforme sur le dispositif de serrage à segments (4).

14. Dispositif de serrage intérieur d'après une des revendications de 6 à 13, **caractérisé en ce que** le boulon d'assemblage (7) est prévu pour exercer une force de commande sur le dispositif d'actionnement (13) en direction de son axe longitudinal médian (20).

15. Dispositif de serrage intérieur d'après une des revendications précédentes, **caractérisé en ce qu'**une bague conique (18) avec des organes de roulement (19) est appliquée sur le mandrin de centrage (8) pour un support centré et présentant peu de friction sur un cône de logement du mandrin de serrage (10).

16. Système de serrage avec un mandrin de serrage (10), qui présente un point de jonction pour la fixation auprès d'une broche porte-outil (40) ainsi qu'un dispositif adaptateur pour un tube de traction de la broche porte-outil (40), et avec un dispositif de serrage intérieur d'après une des revendications précédentes pour l'application auprès du mandrin de serrage (10).
